# EUROPÄISCHE PATENTSCHRIFT

(11) **EP 2 423 108 B1**
(45) Veröffentlichungstag und Bekanntmachung des Hinweises auf die Patenterteilung: **26.12.2018**
(21) Anmeldenummer: 11178633.1
(22) Anmeldetag: 24.08.2011
(51) Int. Cl.: H04W 4/02, H04W 4/42, H04W 4/48, H04L 29/08, B64D 11/00, G07C 5/00, B64F 5/00, G01B 11/14, G01C 3/00, G01C 9/00, G01C 15/00, G06F 17/30, B64F 5/60

(54) **System und Verfahren zum Sammeln von Defektdaten von Bauteilen in einer Passagierkabine eines Fahrzeugs**
System and method for collecting defect data of components in a passenger cabin of a vehicle
Système et procédé de collecte de données défectueuses de composants dans un habitacle de véhicule

(30) Priorität: 25.08.2010 DE 102010035374; 25.08.2010 US 377016 P
(43) Veröffentlichungstag der Anmeldung: 29.02.2012
(73) Patentinhaber: Airbus Operations GmbH, 21129 Hamburg (DE)
(72) Erfinder: Fischer, Daniel, 21244 Buchholz (DE)
(74) Vertreter: LKGLOBAL Lorenz & Kopf PartG mbB Patentanwälte

(56) Entgegenhaltungen:
- EP-A1- 1 860 572
- WO-A2-00/52550
- DE-A1- 19 822 392
- FR-A1- 2 939 220
- US-A1- 2006 235 611
- US-A1- 2009 237 245

## Beschreibung

### TECHNISCHES GEBIET

Die Erfindung betrifft ein System zum Sammeln von Defektdaten von Bauteilen in einer Passagierkabine eines Fahrzeugs mit einer Bauteilidentifikationseinrichtung zum Identifizieren eines betroffenen Bauteils und einer mit der Bauteilidentifikationseinrichtung verbundene Fehlfunktionsauswahleinrichtung zum Auswählen einer Fehlfunktion des identifizierten Bauteils aus einer vordefinierten Menge an bauteilspezifischen Fehlfunktionen. Die Erfindung betrifft auch ein Verfahren zum Sammeln von Defektdaten von Bauteilen in einer Passagierkabine eines Fahrzeugs und ein Fahrzeug mit einer Passagierkabine und einem in dem Fahrzeug installierten System zum Sammeln von Defektdaten von Bauteilen in der Passagierkabine.

### HINTERGRUND DER ERFINDUNG

In Fahrzeugen, die dem gewerblichen Transport von Passagieren dienen und deren Kabinenausstattung als starke Wettbewerbsmerkmale anzusehen sind, ist es unumgänglich, defekte Bauteile in der Passagierkabine zu erkennen und präzise Defektdaten an einem zentralen Ort zu sammeln, um eine möglichst umgehende Reparatur zur Behebung des Defekts zu ermöglichen. Das klassische Verfahren, derartige Defektdaten in Passagierkabinen zu sammeln, ist das Mitführen eines auf Papier basierenden Logbuchs, in das Fahrzeugbegleiter Defektdaten eintragen, die sie entweder selbst festgestellt haben oder die ihnen von einzelnen Passagieren mitgeteilt werden. Problematisch hierbei kann sein, dass zwischen Kenntnisnahme eines Defekts eines Bauteils und der endgültigen Eintragung in das Logbuch einige Zeit vergehen kann, wenn beispielsweise der betreffende Fahrzeugbegleiter Passagiere bedient oder leere Speisenbehälter und Abfälle einsammelt und während dieser Tätigkeit den Hinweis auf einen Defekt erhält. Der Fahrzeugbegleiter kann nach Kenntnisnahme einer solchen Mitteilung nicht umgehend seine Arbeit unterbrechen, um den Eintrag in das Logbuch vorzunehmen, sondern wird erst seine Tätigkeit beenden, um dann den Defekt zu notieren. In der Zwischenzeit kann es sein, dass der Fahrzeugbegleiter dies vergisst oder seine Erinnerung an den Defekt nur noch vage vorliegt und der entsprechende Eintrag in das Logbuch nicht ganz korrekt ist.

EP 1 280 316 A2 zeigt eine elektronische Variante eines Logbuchs, bei der verschiedene Benutzer mit unterschiedlichen Sicherheitsniveaus dialoggeführte Eingaben von Defektdaten mit Hilfe einer mobilen Datensammeleinrichtung vollziehen können, bei der betroffene Bauteile und deren Fehlfunktionen ausgewählt werden können. Hierbei wird gleichzeitig die Berechtigung des jeweiligen Benutzers überprüft. Weiterhin werden daraus generierte Wartungsdaten zur Benutzung während eines Wartungsvorgangs auf mobile Elektronikgeräte übertragen.

WO 00/52550 A2 offenbart eine Vorrichtung und ein Verfahren zum Planen von Wartungsvorgängen, was das zyklische Abfragen von Systemzuständen und das Bereithalten eines interaktiven Fehlereingabesystems umfasst. Bauteile werden über hierarchische Abfragedialoge erfasst.

US 2009/0237245 A1 offenbart ein Verfahren und eine Vorrichtung zur automatisierten Datensammlung bei einer Inspektion unter Ermittlung der Annäherung an zu inspizierende Komponenten.

FR 2 939 220 A1 offenbart ein Verfahren und eine Vorrichtung zum Identifizieren von Ausstattungskomponenten mit Hilfe von RFID an Bord eines Flugzeugs.

EP 1 860 572 A1 offenbart ein Verfahren und eine Vorrichtung zum Erfassen von Mängelangaben für die Instandhaltung eines Objekts, z.B. eines Fahrzeugs, wobei das betreffende Objekt durch die Verwendung von RFID-Tags z.B. unter Verwendung eines mobilen RFID-Lesegeräts eindeutig identifiziert und aufgrund der Annäherung des Lesegeräts an das RFID-Tag und der in dem RFID-Tag unter anderem enthaltenen Ortsangaben auch lokalisiert wird.

### ZUSAMMENFASSUNG DER ERFINDUNG

Das Sammeln von Defektdaten von Bauteilen in einer Passagierkabine eines Fahrzeugs, sei es auf manuelle oder auf elektronische Art und Weise, bietet zwar die Möglichkeit, Defektdaten an einem zentralen Ort zu sammeln und später in ein Wartungssystem zu überführen, dennoch besteht immer noch eine gewisse Unsicherheit hinsichtlich der Präzision der erfassten Defektdaten. Die Aufgabe der Erfindung ist daher, ein System zum Sammeln von Defektdaten von Bauteilen in einer Passagierkabine eines Fahrzeugs vorzuschlagen, bei dem eine möglichst hohe Präzision in Bezug auf das defekte Bauteil, den Ort des defekten Bauteils und den Fehler des defekten Bauteils erreicht wird.

Eine weitere Aufgabe der Erfindung ist, ein derartiges System vorzuschlagen, bei dem ein möglichst geringer manueller Aufwand seitens eines Fahrzeugbegleiters oder eines Passagiers besteht.

Die Aufgabe wird durch ein System mit den Merkmalen des unabhängigen Anspruchs 1 sowie ein Verfahren mit den Merkmalen des unabhängigen Anspruchs 10 gelöst. Vorteilhafte Weiterbildungen sind den Unteransprüchen 2-9 sowie 11 und 12 zu entnehmen.

Gemäß eines ersten Beispiels weist das System eine Bauteilidentifikationseinrichtung zum Identifizieren eines betroffenen Bauteils, bevorzugt aus einer vordefinierten Gesamtmenge von Bauteilen in der Passagierkabine, und eine mit der Bauteilidentifikationseinrichtung verbundene Fehlfunktionsauswahleinrichtung zum Auswählen einer Fehlfunktion des identifizierten Bauteils aus einer vordefinierten Menge an bauteilspezifischen Fehlfunktionen auf. Das System wird durch eine Lokalisierungseinrichtung ergänzt, die die Position eines betroffenen Bauteils in der Passagierkabine erfassen kann und mit der erfassten Position durch die Verbindung mit einer Bauteilidentifikationseinrichtung eine Identifizierung des Bauteils an der erfassten Position auslöst. Ziel dieses Aufbaus ist, direkt beim Erfassen von Defektdaten eine Lokalisierung des betroffenen Bauteils durchzuführen, anstatt sich die Details des defekten Bauteils merken zu müssen, auf eine ungenaue Angabe eines Passagiers zurückgreifen zu müssen oder einen Ablesefehler bei der Bestimmung eines zugehörigen Sitzplatzes oder dergleichen zu übernehmen. Der Vorteil liegt demnach darin, dass die Identifizierung des betroffenen Bauteils erst nach einer Lokalisierung erfolgt und so einen menschlichen Fehler ausschließen kann.

Die Lokalisierungseinrichtung ist dazu eingerichtet, eine Position eines Bauteils im durch die Wandungen der Passagierkabine begrenzten dreidimensionalen Raum hinreichend genau zu bestimmen. Im Stand der Technik existieren eine Vielzahl von Lokalisierungssystemen, die unterschiedlich aufgebaut sein können. Es erscheint praktikabel, dass diese Lokalisierungseinrichtung eine Reihe von fest in der Passagierkabine angeordneten und voneinander beabstandeten Basisstationen aufweist, die dazu eingerichtet sind, die Position einer Zeigeeinrichtung feststellen zu können. Dabei kann die Lokalisierungseinrichtung beispielsweise auf die Messung von Laufzeitunterschieden von Signalen, die zwischen den einzelnen Basisstationen und der Zeigeeinrichtung ausgetauscht werden, zurückgreifen, um so Relativpositionen zu den einzelnen Basisstationen zu ermitteln, die schließlich zu einer dreidimensionalen Position innerhalb der Passagierkabine korreliert werden können. Die Laufzeitunterschiede könnten sich auf die Ausbreitung elektromagnetischer Wellen oder beispielsweise Ultraschallwellen beziehen.

Die Bauteilidentifikationseinrichtung ist mit der Lokalisierungseinrichtung verbunden und kann, beispielsweise aus einer Bauteildatenbank mit Bauteilidentifikationsdaten und zugehörigen dreidimensionale Positionen, aus einer eingehenden Position ein Bauteil oder eine Bauteilgruppe an der erfassten Position identifizieren. Ein Irrtum über das betreffende Bauteil kann damit hinreichend genau ausgeschlossen werden, da Kenntnis über Sitzreihe, Sitznummer oder dergleichen obsolet ist und die Lokalisierungseinrichtung ihrerseits die exakte Position an die Bauteilidentifikationseinrichtung weiterleiten kann. Aus der Liste der in Frage kommenden identifizierten Bauteilen (Geräteliste) kann der Benutzer das betreffende Bauteil auswählen und die Bauteilidentifikation an die Fehlfunktionseinrichtung weiterleiten.

Die Fehlfunktionsauswahleinrichtung kann anhand der Identifizierung des Bauteils eine vorliegende Fehlfunktion nicht automatisch erkennen. Da jedoch üblicherweise für jedes betreffende Bauteil nur eine beschränkte Anzahl von Fehlfunktionen möglich ist, könnten diese durch die Fehlfunktionsauswahleinrichtung für einen Auswahldialog aus einer Fehlfunktionsdatenbank oder einer internen Speichereinheit herausgefiltert werden. Die Fehlfunktionsauswahleinrichtung weist bevorzugt eine Sammlung von bekannten Fehlfunktionen auf, die an einem identifizierten Bauteil festgestellt werden könnten. Die Fehlfunktionsauswahleinrichtung erlaubt daher, die Auflistung sämtlicher denkbarer Fehlfunktionen auf einer Anzeigeeinheit, aus denen ein Benutzer die real festgestellte Fehlfunktion auswählen kann. Dies hat den besonderen Vorteil, dass Freitextangaben über eine vorliegende Fehlfunktion entfallen können, die den Fehler nur selten ausreichend präzise wiedergeben. Die Beschränkung der zur Auswahl stehenden Fehlfunktionen erleichtert weiterhin die Überführung von Defektdaten an ein Wartungssystem, da das Wartungssystem dann nur aus einer abgeschlossenen Menge von möglichen Fehlfunktionen Wartungshinweise generieren muss, ohne Freitextangaben oder dergleichen interpretieren zu müssen.

Beispielhaft weist das System eine Zeigeeinrichtung zum Markieren eines betreffenden Bauteils für die Lokalisierungseinrichtung auf. Die Zeigeeinrichtung kann derart gestaltet sein, dass sie für die Lokalisierungseinrichtung ein eindeutiges, passives Objekt darstellt, das
sich innerhalb der Passagierkabine befindet und optisch oder aufgrund anderer physikalischer Eigenschaften nicht mit anderen Objekten oder Bauteilen verwechselbar ist. Andererseits kann die Zeigeeinrichtung auch als eine aktive Komponente ausgeführt sein, die ein Ortungssignal aussendet, welches von fest in der Passagierkabine angeordneten Basisstationen ausgewertet werden kann. Der Schutzumfang der vorliegenden Erfindung soll sich nicht auf bestimmte Lokalisierungseinrichtungen oder Zeigeeinrichtungen beschränken, daher werden in diesem Zusammenhang lediglich beispielhaft verschiedene Arten von Zeigeeinrichtungen genannt. Eine Zeigeeinrichtung könnte etwa ein elektromagnetisches oder akustisches Signal aussenden, welches von Komponenten der Lokalisierungseinrichtung empfangen werden kann. Aus der Ermittlung von Laufzeitunterschieden dieses Signals an den verschiedenen Basisstationen kann eindeutig die relative Position der Zeigeeinrichtung von den einzelnen Basisstationen der Lokalisierungseinrichtung bestimmt werden. Die Zeigeeinrichtung könnte ferner eine optisch auffällige Farbgebung oder andere Merkmale aufweisen, die von geeigneten Komponenten einer Lokalisierungseinrichtung erkannt werden kann. Hierbei ist allerdings erforderlich, dass beispielsweise Basisstationen, Kameras oder dergleichen in einer ausreichend großen Anzahl innerhalb der Passagierkabine angeordnet sind, damit die Zeigeeinrichtung von einer möglichst großen Anzahl von derartigen Komponenten der Lokalisierungseinrichtung gesehen werden kann, auch wenn sie optisch zu einer oder mehreren Seiten der Passagierkabine verdeckt ist.

Beispielhaft ist die Bauteilidentifikationseinrichtung dazu eingerichtet, mit Hilfe der erfassten Position des betroffenen Bauteils aus einer Bauteilidentifikationsdaten und Positionsdaten von Bauteilen enthaltenden Bauteildatenbank eine Bauteilgruppe mit einem oder mehreren Bauteilen der Passagierkabine für einen Auswahldialog zu filtern, die sich in unmittelbarer Nähe der erfassten Position des betroffenen Bauteils befindet. Handelt es sich bei dem betreffenden Bauteil um ein recht kleines Bauteil oder lässt

sich das Bauteil nicht eindeutig markieren, ohne auch benachbarte Bauteile mit der Zeigeeinrichtung zu berühren oder zu überdecken ist es sinnvoll, die Identifikation auch benachbarter Bauteile in Form einer Bauteilgruppe zu ermöglichen, um später mögliche Fehler auszuschließen oder stets eine neue Positionsbestimmung durchzuführen, bis das richtige Bauteil identifiziert worden ist. Je nach verwendeter Lokalisierungstechnologie kann allerdings die erreichbare Positionierungsgenauigkeit in einem Bereich von +/- 10cm liegen, so dass es auch aus diesem Grunde empfehlenswert ist, gleich eine Bauteilgruppe mit zueinander benachbarten Bauteilen zu identifizieren. Über einen einfachen Auswahldialog kann schnell und unkompliziert zwischen den benachbarten Bauteilen selektiert werden.

Beispielhaft ist die Fehlfunktionsauswahleinrichtung dazu eingerichtet, mögliche Fehlfunktionen für ein ausgewähltes Bauteil aus einer eine vordefinierte Fehlfunktionsdatenbank für einen Auswahldialog zu filtern. Ein Auswahldialog auf einem geeigneten und mit der Fehlfunktionsauswahleinrichtung verbundenen Gerät kann damit rasch zu einer präzisen Bestimmung des vorliegenden Fehlerfalls führen.

In einem Beispiel sind die Bauteilidentifikationseinrichtung und die Fehlfunktionsauswahleinrichtung mit einem Elektronikgerät verbunden, wobei das Elektronikgerät eine Anzeigeeinheit aufweist und dazu eingerichtet ist, einen Auswahldialog darzustellen und ferner eine Eingabeeinheit aufweist, mit der ein Benutzer mit dem Auswahldialog interagieren kann. Wie vorangehend dargestellt ist ein besonderes Merkmal des Systems das Bereitstellen einer Gruppe von in Frage kommenden Bauteilen und nach Auswahl des betreffenden Bauteils die Bereitstellung einer beschränkten Menge an vordefinierten Fehlfunktionen, um für ein identifiziertes Bauteil eine möglichst präzise Fehlfunktionsbeschreibung zu erhalten. Der Benutzer kann mit Hilfe der Eingabeeinrichtung durch den Auswahldialog mit Hilfe einer bevorzugt grafischen Benutzeroberfläche navigieren, in der neben Textinformationen auch Abbildungen von Bauteilen enthalten sein können.

In einem weiteren Beispiel ist das Elektronikgerät dazu eingerichtet, Bauteilidentifikationsdaten und Fehlfunktionsdaten an eine Speichereinheit zu übermitteln, die bevorzugt ein digitales Logbuch oder eine Komponente eines digitalen Logbuchs in Form einer zentralen Defektdatenbank ist. Identifizierte Fehlfunktion können dadurch wie in einem Papier basierenden Logbuch an einem einzigen Ort gespeichert werden, von wo sie dann später automatisiert in ein Wartungssystem überführbar sind.

Beispielhaft weist die Bauteilidentifikationseinrichtung eine Bauteildatenbank auf, in denen die dreidimensionalen Positionen von sämtlichen Bauteilen in der Passagierkabine des Flugzeugs mit Bauteilidentifikationsdaten korreliert sind. Dies ermöglicht, später Rückschlüsse auf das betreffende Bauteil zu ziehen, wenn eine Lokalisierung des betreffenden Bauteils durchgeführt ist. Bauteilidentifikationsdaten können dabei in jeglicher Form vorliegen, beispielsweise als Teilenummer, die um eine exakte Sitzplatzposition oder dergleichen ergänzt werden können. Zusätzlich hierzu wäre auch die Aufnahme von Klartextinformationen denkbar, die zur Indikation einer fehlerhaften Bauteilidentifikation hilfreich sein könnten. Die Datenbank könnte wie eine Auslesetabelle behandelt werden. Die Auswertetabelle muss nicht zwangsläufig zweidimensional, sondern kann auch dreidimensional ausgeführt sein, bei der in einem vorgegebenen zwei- oder dreidimensionalen Raster Positionen mit Bauteilidentifikationsdaten als Datenpunkte enthalten sind, so dass bei Vorliegen einer dreidimensionalen Position leicht passende Bauteilidentifikationsdaten ausgelesen werden können.

Sämtliche vorangehend genannten Datenbanken, wie die Defektdatenbank, die Fehlfunktionsdatenbank, die Bauteildatenbank oder dergleichen sowie die Bauteilidentifikationseinrichtung und die Fehlfunktionsauswahleinrichtung müssen nicht zwangsläufig mit Hilfe unterschiedlicher elektronischer Geräte oder Recheneinheiten realisiert werden, sondern es bietet sich generell an, eine einzige Recheneinheit mit einer oder mehreren Datenbankapplikation zu verwenden, die mehrere Datensätze, Datenbanken oder Tabellen enthält und Positionen mit Bauteilidentifikationsdaten korrelieren kann. Eine Integration der verschiedenen Komponenten mit Hilfe einer einzigen Recheneinheit würde die Komplexität des Systems senken, ebenso das Gewicht und die Integrationskosten. Im Sinne einer verbesserten Zuverlässigkeit könnte auf übliche Maßnahmen zum Steigern der Zuverlässigkeit elektronischer Systeme zurückgegriffen werden, wobei jedoch zu bedenken ist, dass ein derartiges System zum Sammeln bzw. Erfassen von Defektdaten keine Missionskritikalität aufweist.

In einem Beispiel könnte das Elektronikgerät als eine mobile Recheneinheit ausgeführt sein, beispielsweise in Form eines PDA, eines mobilen PCs oder eines sonstigen mobilen elektronischen Geräts. Es sollte dabei sichergestellt werden, dass dieses Elektronikgerät eine Datenverbindungseinrichtung aufweist, mit deren Hilfe notwendige Bauteilidentifikationsdaten und Fehlfunktionsdaten übertragbar sind. Alternativ dazu wäre auch denkbar, dass sämtliche für die Funktion erforderlichen Daten in dieser mobilen Recheneinheit enthalten sind und regelmäßig durch eine entsprechende Datenverbindung oder einen Datenträger aktualisiert werden können, insbesondere nach Austausch einer oder mehrerer Bauteile in der Passagierkabine.

In einem weiteren Beispiel weist das Elektronikgerät die Zeigeeinrichtung zum räumlichen Markieren des betroffenen Bauteils auf. Das Elektronikgerät kann damit als alleinige kompakte Einheit zum Feststellen und Erfassen einer Fehlfunktion eingesetzt werden, ohne auf eine externe, zusätzliche Zeigeeinrichtung zurückgreifen zu müssen.

In einem weiteren Beispiel bietet es sich an, das Elektronikgerät mit einer Leseeinrichtung für Transponder auszurüsten, die zusätzlich zu der elektronischen dreidimensionalen Positionsbestimmung das Auslesen von Transponderinformationen benachbarter Bauteile ermöglicht, damit die Bauteilidentifizierung zusätzlich verbessert werden kann. Generell kann es sich bei den Transpondern um sogenannte RFID-Tags handeln, die bei Anregung durch ein äußeres elektromagnetisches Feld dazu veranlasst werden, einen charakteristischen Datensatz auszusenden, der etwa Bauteilidentifikationsdaten enthält. Wird das Elektronikgerät in die Nähe einer ganzen Reihe von Bauteilen gehalten und wird dort eine Lokalisierung durchgeführt, wird zusätzlich zu der elektronisch bestimmten Position ein Satz von Bauteilidentifikationsdaten durch Auslesen der Transponder erhalten, so dass durch das Elektronikgerät überprüft werden kann, ob die Bauteilidentifizierungseinrichtung des erfindungsgemäßen Systems ein Bauteil nicht identifiziert hat, welches aber einen Datensatz mit Hilfe eines Transponders an das Elektronikgerät übertragen hat (Vollständigere Ist-Konfiguration).

Dadurch wäre es nicht mehr notwendig, sämtliche Bauteile in einer aktuellen Bauteilidentifikationsdatenbank (Kabinenlayout) zu identifizieren, sondern beispielsweise könnten leicht rekonfigurierbare (bewegliche) Bauteile, deren Positionen im laufenden Flugzeugbetriebes nur schwer festzuhalten sind (z.B. Rettungswesten, Classdivider, Feuerlöscher oder dergleichen) unabhängig von der Bauteilidentifikationsdatenbank durch gleichzeitige Lokalisierung des exakten Ortes in der Passagierkabine erfasst werden. Diese so zusätzlich erhaltenen Informationen könnten auch verwendet werden um im laufenden Betrieb die Bauteilidentifikationsdatenbank zu aktualisieren.

Generell stellen die absoluten Positionskoordinaten des Defektes als zusätzliche Information zu der Bauteilidentifikation eine wertvolle Zusatzinformation dar, da damit für die Wartung letztlich unabhängig von menschlichen oder EDV Ungenauigkeiten jeglichen Berichts oder EDV-Fehlern die Stelle des Defekts rekonstruiert werden kann. Auch können auf großflächigen Bauteilen (Risse in Verkleidungen, Flecken auf einem Teppich etc.) die genauen Positionen von Defekten wiedergefunden werden.

Bevorzugt ist das Elektronikgerät ein mobiles Elektronikgerät, das eine Datenverbindungseinrichtung zum Kommunizieren mit der Lokalisierungseinrichtung aufweist, wobei die Datenverbindungseinrichtung insbesondere drahtlose Datenverbindungseinrichtungen umfasst, so dass das Elektronikgerät universell und innerhalb der gesamten Passagierkabine zur Erfassung von Defektdaten einsetzbar ist.

Besonders bevorzugt sind die Bauteilidentifikationseinrichtung, die Fehlfunktionsauswahleinrichtung und optional auch die hierfür notwendigen Datenbanken in das mobile Elektronikgerät integriert.

Gleichermaßen kann es sich anbieten, das mobile Elektronikgerät mit einer Datenverbindungseinrichtung auszurüsten, so dass es mit einer extern ausgeführten Bauteilidentifikationseinrichtung und/oder Fehlfunktionsauswahleinrichtung zur Bearbeitung von Auswahldialogen kommunizieren kann, sollten diese Komponenten des erfindungsgemäßen Systems nicht in das Elektronikgerät integriert werden.

Beispielhaft ist die Zeigeeinrichtung als eine optische Zeigeeinrichtung ausgeführt, die einen Abstandsmesser beinhaltet. Anstatt beispielsweise eine Gehäusekante einer Zeigeeinrichtung zu verwenden, könnte demnach der Benutzer bereits aus einer gewissen Entfernung das gewünschte Bauteil

bzw. dessen Position optisch, zum Beispiel mit Hilfe eines Laserstrahls, markieren. Um die korrekte Position des Markierungspunktes zu ermitteln, sollte die Zeigeeinrichtung einen zusätzlichen Lagesensor beinhalten, um eine räumliche Ausrichtung relativ zu der Lokalisierungseinrichtung zu ermitteln. Die Position der Zeigeeinrichtung, zu der vektoriell die Ausrichtung der Zeigeeinrichtung sowie die Verbindungslinie zwischen der Zeigeeinrichtung und dem Markierungspunkt addiert werden müsste, ergäbe dann die exakte Position des auszuwählenden Bauteils. Hierdurch könnte beispielsweise in eng bestuhlten Passagierkabinen eine Störung von Passagieren vermieden werden, wenn das betreffende Bauteil zwar sichtbar, aber für einen Fahrzeugbegleiter nicht gut erreichbar ist, ohne dass beispielsweise Passagiere aufstehen müssten und dergleichen.

Die Aufgabe der Erfindung wird ferner gelöst durch ein Verfahren zum Sammeln von Defektdaten von Bauteilen in einer Passagierkabine eines Fahrzeugs mit den Merkmalen des unabhängigen Anspruchs 10. Vorteilhafte Weiterbildungen sind dem Unteranspruch 11 zu entnehmen. Das Verfahren weist beispielhaft die nachfolgend aufgeführten Verfahrensschritte auf, die eine verbesserte Sammlung von Defektdaten von Bauteilen ermöglichen. Nach Feststellen eines Defekts eines Bauteils wird das betreffende Bauteil mit Hilfe der Lokalisierungseinrichtung lokalisiert, die die markierte Position des Bauteils an eine Bauteilidentifizierungseinrichtung weiterleitet, wo dann aus der dreidimensionalen Position des betreffenden Bauteils dessen Identifizierung gewonnen wird. Dies könnte beispielhaft durch Auslesen einer Tabelle bestehen, die in einer zwei- oder dreidimensionalen Form vorliegt, in der Positionen innerhalb der Passagierkabine mit Bauteilidentifikationsdaten korreliert werden. Ist die Identifikation des Bauteils gelungen, ruft die Fehlfunktionsauswahleinrichtung sämtliche denkbaren Fehlfunktionen des identifizierten Bauteils aus einer Datenbank, einem Speicher oder dergleichen ab und präsentiert die möglichen Fehlfunktionen einem Benutzer. Nach Auswahl der zutreffenden Fehlfunktion wird diese schließlich zusammen mit den Bauteilidentifikationsdaten in einer Defektdatenbank abgelegt. Dadurch kann präzise, eindeutig und zweifelsfrei der vorliegende Defekt in eine Defektdatenbank überführt werden, ohne dass manuelle Eingaben, Freitextinformationen, Fehlinformationen oder verblasste Erinnerung den vorliegenden Fehler verfälschen können.

Schließlich wird die Aufgabe auch durch ein Flugzeug gelöst, das mindestens eine Passagierkabine aufweist, die mit einem erfindungsgemäßen System ausgestattet ist. Gerade in großen, modernen Verkehrsflugzeugen mit einer deutlich dreistelligen Anzahl von Passagiersitzen, einem heutzutage sehr hohen Ausstattungsniveau und entsprechendem Komfort für Passagiere existieren eine Vielzahl von unterschiedlichsten Bauteilen mit völlig unterschiedlichen möglichen Fehlfunktionen, so dass Flugbegleiter festgestellte Defekte äußert präzise festhalten müssen, um eine zeitnahe Reparatur bzw. Wartung gewährleisten zu können. Das erfindungsgemäße System vereinfacht dies sehr deutlich, da sich der Flugbegleiter um die genaue Positionierung des Bauteils, dessen Bezeichnung und die in Frage kommenden Fehlfunktionen keine Gedanken machen muss und durch die beschränkte Auswahl von möglichen Fehlfunktionen ohne die Notwendigkeit von Freitextinformationen in einer sehr kurzen Zeit eine äußert präzise Angabe über den festgestellten Defekt ermöglicht wird. Dadurch wird der Komfort an Bord des Flugzeugs weiter gesteigert, denn es kann beispielsweise durch Verbindung mit einem Wartungssystem sichergestellt werden, dass der Komfort auf allen Sitzplätzen stets aufrechterhalten werden kann.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbeziehungen. In den Figuren stehen weiterhin gleiche Bezugszeichen für gleiche oder ähnliche Objekte.
Fig. 1 zeigt das erfindungsgemäße System in einer schematischen Darstellung.
Fig. 2 zeigt den Ablauf des Markierens und Auswählens eines Gerätes und einer Fehlfunktion in einer schematischen Darstellung.
Fig. 3 zeigt das erfindungsgemäße Verfahren in einer schematischen, blockbasierten Darstellung.
Fig. 4 zeigt schließlich ein Flugzeug, das eine Passagierkabine aufweist, die mit mindestens einem erfindungsgemäßen System ausgestattet ist.

### DETAILLIERTE DARSTELLUNG EXEMPLARISCHER AUSFÜHRUNGSFORMEN

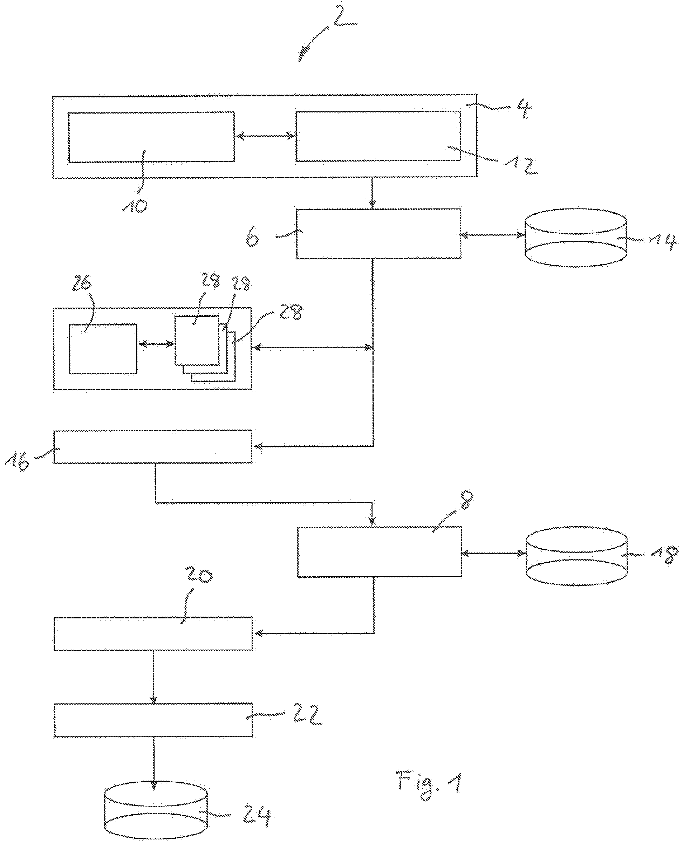

In Fig. 1 wird das erfindungsgemäße System 2 gezeigt, welches eine Lokalisierungseinrichtung 4, eine Bauteilidentifikationseinrichtung 6 und eine Fehlfunktionsauswahleinrichtung 8 aufweist. Die Lokalisierungseinrichtung 4 steht mit einer Zeigeeinrichtung 10 in Kontakt, um die Position der Zeigeeinrichtung 10 innerhalb der Kabine zu ermitteln. Die Lokalisierung kann beispielsweise auf der Messung von Laufzeitunterschieden elektromagnetischer oder akustischer Wellen, die von der Zeigeeinrichtung an mehrere Basisstationen 12 oder andere Gegenstücke innerhalb der Passagierkabine ausgesandt werden, basieren. Zur exakten Bestimmung einer räumlichen Position sind bevorzugt vier oder mehr Basisstationen 12 bzw. Empfangseinrichtungen an definierten Orten fest in der Passagierkabine zu installieren. Im Stand der Technik existieren eine Vielzahl unterschiedlich gearteter Lokalisierungseinrichtungen, auf deren Auswahl sich die vorliegende Erfindung nicht beschränkt.

Das erfindungsgemäße System 2 ist durch die Bestimmung der dreidimensionalen Position der Zeigeeinrichtung 10 innerhalb der Passagierkabine in der Lage, mit Hilfe der Bauteilidentifizierungseinrichtung 6 in der Nähe der Zeigeeinrichtung 10 befindliche Bauteile zu identifizieren. Hierfür konsultiert die Bauteilidentifizierungseinrichtung beispielhaft eine Bauteilidentifikationsdatenbank 14, in der räumliche Positionen von Bauteilen mit deren Bauteilidentifikationsdaten tabellarisch korreliert werden. Bei Vorliegen einer dreidimensionalen Position können damit in Frage kommende Bauteile identifiziert werden, die einem Benutzer zur Auswahl, beispielsweise mit Hilfe einer grafischen Benutzeroberfläche 16, präsentiert werden können.

Nach Auswahl des betreffenden Bauteils, das einen festgestellten Defekt aufweist, kann mit Hilfe der Fehlfunktionsauswahleinrichtung 8 beispielhaft unter Konsultierung einer Fehlfunktionsdatenbank 18 eine vordefinierte Menge an in Frage kommender Fehlfunktionen zusammengestellt und einem Benutzer zur Auswahl präsentiert werden, beispielsweise mit Hilfe einer weiteren grafischen Benutzeroberfläche 20.

Nach Auswahl der zutreffenden Fehlfunktion liegt demnach ein Datensatz mit exakten Bauteilidentifikationsdaten und exakten Fehlfunktionsdaten vor, der in eine Logbuchapplikation 22 überführt werden kann. Diese könnte mit einer Defekt- oder Logbuchdatenbank 24 oder einer anderen Speichereinheit in Verbindung stehen, in der zentral sämtliche innerhalb der Passagierkabine vorliegende Fehlfunktionen oder andere Defektdaten gespeichert sind und dann eindeutig in ein Wartungssystem zum Generieren von Wartungshinweisen oder Wartungsplänen überführt werden können.

Die Bauteilidentifizierungseinrichtung 6, die Fehlfunktionsauswahleinrichtung 8 und die Logbuchapplikation 22 müssen nicht zwangsläufig als eigenständige Hardwarebasierte Geräte ausgeführt sein, sondern können auch in Form von Anwendungsprogrammen auf einem stationären oder einem mobilen Gerät installiert sein, welches über eine geeignete Datenverbindung zumindest mit der Lokalisierungseinrichtung 4 kommunizieren kann. Die Bauteilidentifikationsdatenbank 14 und die Fehlfunktionsdatenbank 18 sind bei der derzeitigen technischen Entwicklung mobiler Geräte, wie etwa PDAs, problemlos mobil speicher- und ausführbar.

Die Zeigeeinrichtung 10 muss ebenfalls nicht zwangsläufig als ein separates Gerät ausgeführt werden, sondern könnte in Form einer Anwendung in Kombination mit einer geeigneten Elektronikkomponente zum Aussenden elektromagnetischer oder akustischer Wellen auf dem mobilen Gerät ausgeführt werden, so dass sämtliche in Fig. 1 gezeigten Komponenten mit Ausnahme der Basisstationen 12 der Lokalisierungseinrichtung 2 innerhalb eines einzigen mobilen Geräts vorgehalten werden können.

Die Identifikation eines Bauteils oder einer Bauteilgruppe kann zusätzlich durch den Einsatz eines Lesegeräts 26 für Transponder 28, beispielsweise RFID-Tags, verbessert werden. Besonders bei kleinen Bauteilen, die mit anderen kleinen Bauteilen im Verbund angeordnet sind, so dass eine eindeutige Lokalisierung mit Hilfe der Lokalisierungseinrichtung 4 erschwert wird, bietet sich das Ausweichen auf die Erfassung von Transponderdaten an. Zusätzlich hierzu kann bei der Erfassung von Transponderdaten dennoch die ermittelte Position innerhalb der Kabine bestimmt werden, um diese Position zusammen mit den Transponderdaten zu speichern. Dies erleichtert sowohl die Pflege der Gerätedatenbank 14, da nicht sämtliche dreidimensionalen Positionen aller kleineren Bauteile in der Passagierkabine erfasst werden müssen und weiterhin die Wartungsarbeiten, da das Wartungspersonal auf einen Blick sehen kann, wo sich das defekte Bauteil innerhalb der Kabine befindet.

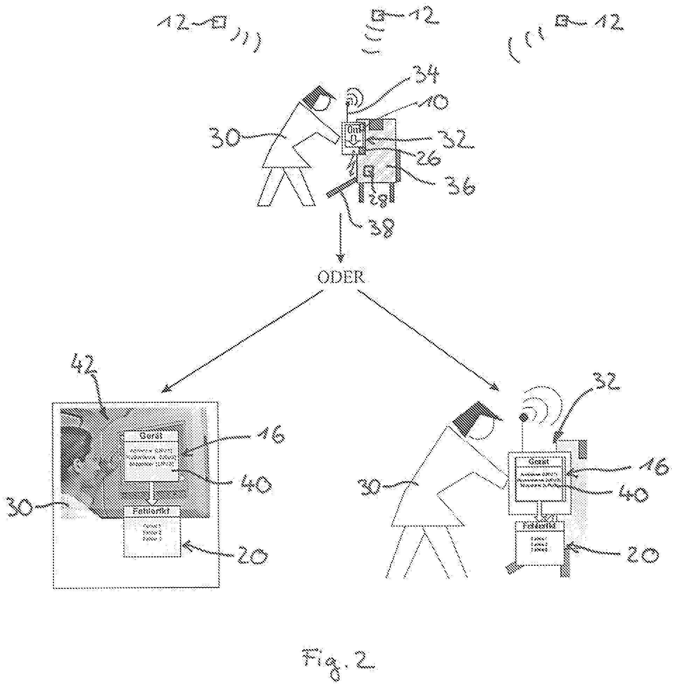

Zu den unterschiedlichen Ausführungen wird in Fig. 2 etwas detaillierter eingegangen. Ein Fahrzeugbegleiter 30 bedient eine Zeigeeinrichtung 32, die in Form eines PDAs ausgeführt ist, der eine Elektronikkomponente mit Antenne 34 zum Aussenden elektromagnetischer Wellen zur Lokalisierung und/oder zur Datenübertragung aufweist. Der Fahrzeugbegleiter 30 hält die Zeigeeinrichtung 32 an ein Bauteil 36 und löst durch Betätigung eines Eingabemittels eine Lokalisierung aus, so dass beispielhaft Laufzeitdifferenzen zwischen der Zeigeeinrichtung 32 und Basisstationen 12 innerhalb der Passagierkabine ermittelt und mit Positionsdaten der Basisstationen 12 korreliert werden. Die Lokalisierung kann auch als "Markieren eines defekten Gerätes" bezeichnet werden. Da bei dem gezeigten Bauteil 36 ein Passagiersitz vorliegt, der eine ganze Reihe von unterschiedlichen eigenständigen Komponenten aufweist, kann aufgrund der ermittelten Position die Identifikation der betreffenden Komponente 38, eine defekte Armlehne, nicht ganz eindeutig erfolgen. Aus diesem Grunde ist die Bauteilidentifizierungseinrichtung 6 bevorzugt dafür ausgelegt, sämtliche in unmittelbarer Nachbarschaft der Zeigeeinrichtung 32 befindlichen Bauteile auf einer Anzeigeeinheit 40 zu präsentieren, auf der die grafische Benutzeroberfläche 16 aus Fig. 1 dargestellt wird, aus denen dann das betreffende Bauteil 38 ausgewählt werden kann. Die Anzeigeeinheit 40 könnte entweder stationär in Form eines Kabinen- oder Fahrzeugbegleiterpanels 42 ausgeführt sein oder in der Zeigeeinrichtung 32 integriert sein, wie in Fig. 2 weiter rechts dargestellt wird.

Zusätzlich kann auch mit Hilfe eines in die Zeigeeinrichtung 32 integrierten Lesegeräts 26 für Transponder 28 ein Transponderdatensatz gelesen werden, der das Bauteil 36 als Passagiersitz identifiziert.

Nach Auswahl des defekten Bauteils kann ebenfalls mit Hilfe einer grafischen Benutzeroberfläche 20 die vorliegende Fehlfunktion ausgewählt werden.

Zur Vereinfachung des Eintrages von Defektdaten in ein digitales Logbuch 22 bietet es sich an, innerhalb der Passagierkabine an einem zentralen Ort ein mobiles Gerät zu haltern, das bei Bekanntwerden von Defekten aus einer Halterung herausgelöst und dann zu dem betreffenden Bauteil geführt wird. Dies entspräche der Darstellung aus Fig. 2, wobei die Integration der Bauteilidentifikationseinrichtung 6, der Fehlfunktionsauswahleinrichtung 8 und der Zeigeeinrichtung 32 innerhalb dieses mobilen Geräts in größeren Fahrzeugen zu bevorzugen wäre, da eine einzelne Zeigeeinrichtung 32 zur Lokalisierung eines Bauteils und anschließender Abarbeitung von Auswahldialogen an einem Kabinenpanel 42 nicht unbedingt praktikabel ist.

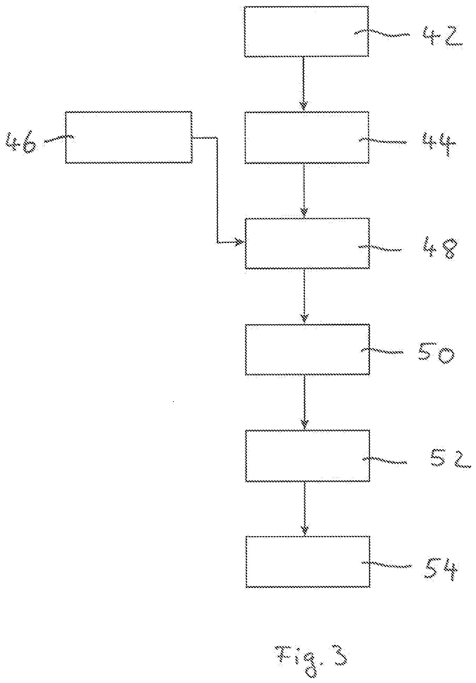

Fig. 3 zeigt in einer schematischen, blockbasierten Darstellung ein erfindungsgemäßes Verfahren, das die an die Erfindung gestellte Aufgabe zu lösen vermag. Das Verfahren beginnt mit dem Schritt des Lokalisierens 42 einer Zeigeeinrichtung, wonach eine Filterung 44 in Frage kommender Bauteile durchgeführt wird. Zusätzlich kann das Lesen 46 von Transponderdaten des betreffenden Bauteils durchgeführt werden. Nach dem Bereitstellen eines Abfragedialogs 48 und einer entsprechenden Auswahl durch einen Fahrzeugbegleiter wird eine Menge in Frage kommender Fehlfunktionen aus einer vordefinierten Menge an möglichen Fehlfunktionen gefiltert 50 und in Form eines Auswahldialogs dem Fahrzeugbegleiter bereitgestellt 52. Hiernach wird ein Datensatz mit Bauteilidentifikationsdaten und Fehlfunktionsdaten an eine zentrale Speichereinheit überführt 54, die exemplarisch als Defektdatenbank 24 ausgeführt ist.

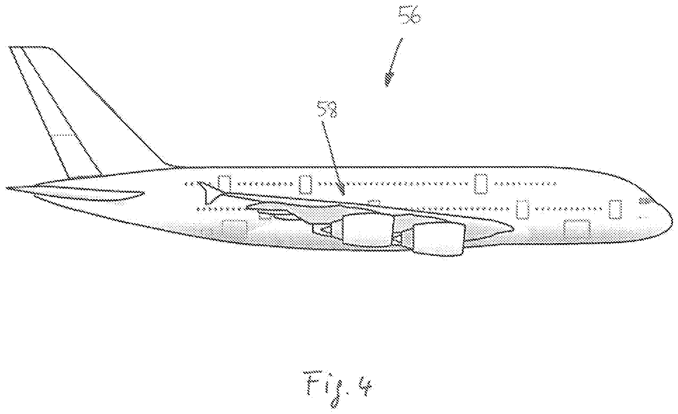

Fig. 4 zeigt schließlich ein Verkehrsflugzeug 56, das eine Passagierkabine 58 aufweist, die mit einem erfindungsgemäßen System 2 ausgestattet ist. Insbesondere bei größeren Verkehrsflugzeugen mit einer großen Anzahl von installierten Bauteilen innerhalb der Passagierkabine empfiehlt es sich, das erfindungsgemäße System 2 einzusetzen, um möglichst präzise und fehlerfrei Fehlfunktionsdaten und Bauteilidentifikationsdaten in ein digitales Logbuch zu überführen, um eine zeitnahe Wartung zu ermöglichen.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. System (2) zum Sammeln von Defektdaten von Bauteilen (36, 38) in einer Passagierkabine eines Fahrzeugs, aufweisend
- eine Bauteilidentifikationseinrichtung (6) zum Identifizieren eines betroffenen Bauteils,
- eine mit der Bauteilidentifikationseinrichtung verbundene Fehlfunktionsauswahleinrichtung (8) zum Auswählen einer Fehlfunktion des identifizierten Bauteils aus einer vordefinierten Menge an bauteilspezifischen Fehlfunktionen,
- eine Lokalisierungseinrichtung (4) zum Erfassen einer Position des betroffenen Bauteils in der Passagierkabine, die mit der Bauteilidentifikationseinrichtung verbunden ist, und
- eine Zeigeeinrichtung (10, 32) zum Markieren eines betreffenden Bauteils aus einer gewissen Entfernung, wobei die Zeigeeinrichtung (10, 32) als eine optische Zeigeeinrichtung ausgeführt ist, die eine Abstandsmesseinrichtung zum Ermitteln des Abstandes zwischen der Zeigeeinrichtung und dem betreffenden Bauteil (36, 38) und einen Lagesensor zum Erfassen der räumlichen Ausrichtung der Zeigeeinrichtung bei dem Markieren beinhaltet,
- wobei die Lokalisierungseinrichtung (4) mit der Zeigeeinrichtung (10, 32) in Kontakt steht, um die dreidimensionale Position der Zeigeeinrichtung (10, 32) innerhalb der Passagierkabine zu bestimmen, und
- dazu eingerichtet ist, anhand der dreidimensionalen Position der Zeigeeinrichtung (10, 32) mit Hilfe der Bauteilidentifizierungseinrichtung 6 in der Nähe der Zeigeeinrichtung 10, 32 befindliche Bauteile zu identifizieren,
- indem die Bauteilidentifikationseinrichtung (6) dazu eingerichtet ist, mit Hilfe der erfassten Position des betroffenen Bauteils aus einer Bauteilidentifikationsdaten und Positionsdaten von Bauteilen enthaltenden Bauteildatenbank (14) eine Bauteilgruppe mit einem oder mehreren Bauteilen der Passagierkabine für einen Auswahldialog zu filtern, die sich in der Nähe der - mittels der in der Nähe des betroffenen Bauteils (36, 38) positionierten Zeigeeinrichtung (10, 32) erfassten - Position des betroffenen Bauteils (36, 38) befindet.

2. System nach einem der vorhergehenden Ansprüche, wobei die Fehlfunktionsauswahleinrichtung (8) dazu eingerichtet ist, mögliche Fehlfunktionen für ein ausgewähltes Bauteil aus einer eine vordefinierte Menge an möglichen Fehlfunktionen beinhaltenden Fehlfunktionsdatenbank (18) für einen Auswahldialog zu filtern.

3. System nach einem der vorhergehenden Ansprüche, wobei ein Elektronikgerät (32, 42), das mit der Bauteilidentifikationseinrichtung (6) und der Fehlfunktionsauswahleinrichtung (8) verbunden ist und eine Anzeigeeinheit (40) und eine Eingabeeinheit zum Bereitstellen eines durch die Eingabeeinheit bedienbaren Auswahldialogs aufweist.

4. System nach Anspruch 3 wobei das Elektronikgerät (32, 42) dazu eingerichtet ist, Bauteilidentifikationsdaten und Fehlfunktionsdaten des ausgewählten Bauteils an eine Speichereinheit (24) zu übermitteln.

5. System nach Anspruch 3 oder 4, wobei das Elektronikgerät (32) die Zeigeeinrichtung (10, 32) zum räumlichen Markieren des betroffenen Bauteils aufweist.

6. System nach einem der Ansprüche 3 bis 5, wobei das Elektronikgerät (32) ferner eine Transponder-Leseeinrichtung (26) zum Auslesen von Transpondern (28) von Bauteilen aufweist.

7. System nach einem der Ansprüche 3 bis 6, wobei das Elektronikgerät (32) ein mobiles Elektronikgerät ist und eine Datenverbindungseinrichtung zum Kommunizieren mit der Lokalisierungseinrichtung (4) aufweist.

8. System nach Anspruch 7, wobei die Bauteilidentifikationseinrichtung (6), die Fehlfunktionsauswahleinrichtung (8), die Bauteildatenbank (14) und die Fehlfunktionsdatenbank (18) in Form von Softwareanwendungen realisiert sind, die auf dem mobilen Elektronikgerät (32) installiert sind und mit der Lokalisierungseinrichtung (4) kommunizieren.

9. System nach Anspruch 7, wobei das mobile Elektronikgerät (32) dazu eingerichtet ist, mit einer extern ausgeführten Bauteilidentifikationseinrichtung (6) und/oder Fehlfunktionsauswahleinrichtung (8) zur Bearbeitung von Auswahldialogen zu kommunizieren.

10. Verfahren zum Sammeln von Defektdaten von Bauteilen in einer Passagierkabine eines Fahrzeugs, aufweisend die Schritte:
- Erfassen (42) der Position eines betroffenen Bauteils durch eine optische Zeigeeinrichtung, die eine Abstandsmesseinrichtung zum Ermitteln des Abstandes zwischen der Zeigeeinrichtung und dem betreffenden Bauteil und einen Lagesensor zum Erfassen der räumlichen Ausrichtung der Zeigeeinrichtung bei dem Markieren aus einer gewissen Entfernung beinhaltet, und Erfassen der dreidimensionalen Position der Zeigeeinrichtung,
- Filtern (44) einer Bauteilgruppe mit einem oder mehreren Bauteilen, die in unmittelbarer Nähe der erfassten dreidimensionalen Position angeordnet sind, aus einer Bauteildatenbank,
- Bereitstellen (48) eines Auswahldialogs zum Auswählen des betroffenen Bauteils,
- Filtern (50) möglicher Fehlfunktionen des betroffenen Bauteils aus einer Fehlfunktionsdatenbank,
- Bereitstellen (52) eines Auswahldialogs zum Auswählen der passenden Fehlfunktion,
- Ablegen (54) von Bauteilidentifikationsdaten und Fehlfunktionsdaten in einer Speichereinheit.

11. Verfahren nach Anspruch 10, ferner aufweisend den Schritt
- Lesen (46) von Transponderdaten eines Transponders (28) zur Bauteilidentifizierung.

12. Flugzeug, aufweisend eine Passagierkabine und ein System nach einem der Ansprüche 1 bis 9.

## Claims

1. System (2) for collecting defect data relating to components (36, 38) in a passenger cabin of a vehicle, having
- a component identification device (6) for identifying an affected component,
- a malfunction selection device (8) which is connected to the component identification device and is intended to select a malfunction of the identified component from a predefined set of component-specific malfunctions,
- a localization device (4) for capturing a position of the affected component in the passenger cabin, which localization device is connected to the component identification device, and
- a showing device (10, 32) for marking a relevant component from a certain distance, wherein the showing device (10, 32) is in the form of an optical showing device which contains a distance measuring device for determining the distance between the showing device and the relevant component (36, 38) and a position sensor for capturing the spatial orientation of the showing device during marking,
- wherein the localization device (4) is in contact with the showing device (10, 32), in order to determine the three-dimensional position of the showing device (10, 32) inside the passenger cabin, and
- is set up to identify components in the vicinity of the showing device (10, 32) on the basis of the three-dimensional position of the showing device (10, 32) with the aid of the component identification device (6),
- by virtue of the component identification device (6) being set up to filter a component group having one or more components of the passenger cabin, from a component database (14) containing component identification data and position data relating to components, for a selection dialogue with the aid of the captured position of the affected component, which component group is in the vicinity of the position of the affected component (36, 38), as captured by means of the showing device (10, 32) positioned in the vicinity of the affected component (36, 38).

2. System according to one of the preceding claims, wherein the malfunction selection device (8) is set up to filter possible malfunctions for a selected component, from a malfunction database (18) containing a predefined set of possible malfunctions, for a selection dialogue.

3. System according to one of the preceding claims, wherein an electronic device (32, 42) which is connected to the component identification device (6) and to the malfunction selection device (8) and has a display unit (40) and an input unit for providing a selection dialogue which can be operated by means of the input unit.

4. System according to Claim 3, wherein the electronic device (32, 42) is set up to transmit component identification data and malfunction data relating to the selected component to a storage unit (24).

5. System according to Claim 3 or 4, wherein the electronic device (32) has the showing device (10, 32) for spatially marking the affected component.

6. System according to one of Claims 3 to 5, wherein the electronic device (32) also has a transponder reading device (26) for reading transponders (28) of components.

7. System according to one of Claims 3 to 6, wherein the electronic device (32) is a mobile electronic device and has a data connection device for communicating with the localization device (4).

8. System according to Claim 7, wherein the component identification device (6), the malfunction selection device (8), the component database (14) and the malfunction database (18) are in the form of software applications which are installed on the mobile electronic device (32) and communicate with the localization device (4) .

9. System according to Claim 7, wherein the mobile electronic device (32) is set up to communicate with an external component identification device (6) and/or a malfunction selection device (8) for the purpose of processing selection dialogues.

10. Method for collecting defect data relating to components in a passenger cabin of a vehicle, having the steps of:
- capturing (42) the position of an affected component by means of an optical showing device which contains a distance measuring device for determining the distance between the showing device and the relevant component and a position sensor for capturing the spatial orientation of the showing device during the marking from a certain distance, and capturing the three-dimensional position of the showing device,
- filtering (44) a component group having one or more components arranged in the immediate vicinity of the captured three-dimensional position from a component database,
- providing (48) a selection dialogue for selecting the affected component,
- filtering (50) possible malfunctions of the affected component from a malfunction database,
- providing (52) a selection dialogue for selecting the appropriate malfunction,
- storing (54) component identification data and malfunction data in a storage unit.

11. Method according to Claim 10, also having the step of
- reading (46) transponder data from a transponder (28) for component identification.

12. Aircraft having a passenger cabin and a system according to one of Claims 1 to 9.

## Revendications

1. Système (2) de collecte de données de défauts de composants (36, 38) dans une cabine de passagers de véhicule, comportant
- un dispositif d'identification de composant (6) destiné à identifier un composant concerné,
- un dispositif de sélection de dysfonctionnement (8) relié au dispositif d'identification de composant, destiné à sélectionner un dysfonctionnement du composant identifié parmi un ensemble prédéfini de dysfonctionnements spécifiques du composant,
- un dispositif de localisation (4) destiné à détecter une position du composant concerné dans la cabine de passagers, qui est relié au dispositif d'identification de composant, et
- un dispositif de pointage (10, 32) destiné à marquer un composant concerné depuis une certaine distance, dans lequel le dispositif de pointage (10, 32) est réalisé sous la forme d'un dispositif de pointage optique qui comporte un dispositif de mesure de distance destiné à déterminer la distance entre le dispositif de pointage et le composant concerné (36, 38) et un détecteur de position destiné à détecter l'orientation spatiale du dispositif de pointage lors du marquage,
- dans lequel le dispositif de localisation (4) est en contact avec le dispositif de pointage (10, 32) afin de déterminer la position tridimensionnelle du dispositif de pointage (10, 32) à l'intérieur de la cabine de passagers, et
- est conçu pour identifier, sur la base de la position tridimensionnelle du dispositif de pointage (10, 32), à l'aide du dispositif d'identification de composant (6), des composants situés à proximité du dispositif de pointage (10, 32),
- le dispositif d'identification de composant (6) étant conçu pour filtrer, à l'aide de la position détectée du composant concerné, à partir d'une base de données (14) contenant des données d'identification de composants et de position des composants, un groupe de composants contenant un ou plusieurs composants de la cabine de passagers pour un dialogue de sélection, qui se trouve au voisinage de la position du composant concerné (36, 38) - détectée au moyen du dispositif de pointage (10, 32) positionné au voisinage du composant concerné (36, 38) .

2. Système selon l'une des revendications précédentes, dans lequel le dispositif de sélection de dysfonctionnement (8) est conçu pour filtrer les dysfonctionnements possibles d'un composant sélectionné dans une base de données de dysfonctionnements (18) contenant un ensemble prédéfini de dysfonctionnements possibles pour un dialogue de sélection.

3. Système selon l'une des revendications précédentes, dans lequel un appareil électronique (32, 42) qui est relié au dispositif d'identification de composant (6) et au dispositif de sélection de dysfonctionnement (8) et comprend une unité d'affichage (40) et une unité de saisie destinée à fournir une boîte de dialogue de sélection pouvant être manipulée par l'unité de saisie.

4. Système selon la revendication 3, dans lequel l'appareil électronique (32, 42) est conçu pour transmettre à une unité de mémoire (24) des données d'identification de composant et des données de dysfonctionnements du composant sélectionné.

5. Système selon la revendication 3 ou 4, dans lequel l'appareil électronique (32) comporte le dispositif de pointage (10, 32) destiné au marquage spatial du composant concerné.

6. Système selon l'une des revendications 3 à 5, dans lequel l'appareil électronique (32) comprend en outre un dispositif de lecture de transpondeur (26) destiné à lire des transpondeurs (28) de composants.

7. Système selon l'une des revendications 3 à 6, dans lequel l'appareil électronique (32) est un appareil électronique mobile et comprend un dispositif de liaison de données destiné à communiquer avec le dispositif de localisation (4).

8. Système selon la revendication 7, dans lequel le dispositif d'identification de composant (6), le dispositif de sélection de dysfonctionnement (8), la banque de données de composants (14) et la banque de données de dysfonctionnements (18) sont réalisés sous la forme de logiciels qui sont installés sur l'appareil électronique mobile (32) et qui communiquent avec le dispositif de localisation (4).

9. Système selon la revendication 7, dans lequel le dispositif électronique mobile (32) est configuré pour communiquer avec un dispositif d'identification de composant (6) et/ou un dispositif de sélection de dysfonctionnement (8) mis en oeuvre de manière externe, afin de traiter des dialogues de sélection.

10. Procédé de collecte de données de défauts de composants dans une cabine de passagers d'un véhicule, comprenant les étapes consistant à :
- détecter (42) la position d'un composant concerné au moyen d'un dispositif de pointage optique comprenant un dispositif de mesure de distance destiné à déterminer la distance entre le dispositif de pointage et le composant concerné et un capteur de position destiné à détecter l'orientation spatiale du dispositif de pointage pendant le marquage depuis une distance déterminée, et détecter la position tridimensionnelle du dispositif de pointage,
- filtrer (44), à partir d'une base de données de composants, un ensemble de composants comprenant un ou plusieurs composants situés à proximité immédiate de la position tridimensionnelle détectée,
- prévoir (48) un dialogue de sélection permettant de sélectionner le composant concerné,
- filtrer (50), à partir d'une base de données de dysfonctionnements, des dysfonctionnements possibles du composant concerné,
- prévoir (52) un dialogue de sélection permettant de sélectionner le dysfonctionnement correspondant,
- stocker (54) des données d'identification de composant et des données de dysfonctionnements dans une unité de mémoire.

11. Procédé selon la revendication 10, comprenant en outre l'étape consistant à lire (46) des données de transpondeur d'un transpondeur (28) afin d'identifier un composant.

12. Aéronef comprenant une cabine de passagers et un système selon l'une des revendications 1 à 9.
